# EUROPÄISCHE PATENTSCHRIFT

(11) **EP 2 760 660 B1**
(45) Veröffentlichungstag und Bekanntmachung des Hinweises auf die Patenterteilung: **21.10.2015**
(21) Anmeldenummer: 12766306.0
(22) Anmeldetag: 21.09.2012
(51) Int. Cl.: B29C 63/04, B32B 38/18

(54) **VERFAHREN ZUM HERSTELLEN EINES INNENAUSSTATTUNGSTEILS EINES FAHRZEUGS**
METHOD FOR PRODUCING AN INTERIOR TRIM PART OF A VEHICLE
PROCÉDÉ DE FABRICATION D'UNE PARTIE D'ÉQUIPEMENT INTÉRIEUR D'UN VÉHICULE

(30) Priorität: 29.09.2011 DE 102011083711
(43) Veröffentlichungstag der Anmeldung: 06.08.2014
(73) Patentinhaber: Lisa Dräxlmaier GmbH, 84137 Vilsbiburg (DE)
(72) Erfinder: OSTNER, Daniel, 84144 Geisenhausen (DE); JÜNGER, Astrid, 83071 Stephanskirchen (DE); FAGNER, Andrea, 84155 Bodenkirchen (DE)
(86) Internationale Anmeldenummer: PCT/EP2012/068619
(87) Internationale Veröffentlichungsnummer: WO 2013/045356

(56) Entgegenhaltungen:
- EP-A1- 2 143 589
- WO-A1-98/26918
- DE-A1- 10 244 709

## Beschreibung

### TECHNISCHES GEBIET

Die vorliegende Erfindung betrifft ein Verfahren zum Herstellen eines Innenausstattungsteils eines Fahrzeugs, bei dem ein zumindest bereichsweise mit einer unebenen Fläche versehener Träger ausgebildet und mit einer Dekorschicht aus Papier versehen wird.

### STAND DER TECHNIK

Bei der Herstellung von Innenausstattungsteilen für Fahrzeuge nehmen diese Innenausstattungsteile häufig Formen an, die unebene Flächen aufweisen. Bisher werden solche unebenen Flächen in der Regel als Kunststoffbauteile in einem Spritzgießverfahren oder aber aus miteinander verpressten Naturfasernmatten als Träger ausgebildet und in einem zweiten Schritt optisch aufgewertet, beispielsweise mit einer Kaschierung wie einem Leder und dergleichen überzogen.

Aus der DE 10 2008 033 283 B3 geht ein Verfahren zum Herstellen einer Dekoroberfläche für Verkleidungsteile für Kraftfahrzeuginnenräume hervor, bei dem eine einteilige Haut durch Vorsehen von Nähten in eine Form gebracht wird, so dass ein Träger mit einer unebenen Oberfläche dekorativ ausgestaltet werden kann.

Dieses Dokument aus dem Stand der Technik betrifft Dekoroberflächen, bei denen ein Träger mit einer Kunstlederhaut, einer Slushhaut, einer TPO-Folie, einer PVC-Folie, einer Schaumfolie, einer Sprühhaut oder einer Gießhaut überzogen wird, um ein dekoratives Erscheinungsbild mit einer Naht zu erhalten. Das Dokument lehrt dabei, die Dekorschicht beispielsweise schlaufenförmig in eine geschlossene Falte zu legen und diese mit einer Funktionsnaht zu vernähen. Ziel dieser Anmeldung ist es dabei, den Ausschuss bei Produktion von genähten Dekorbezügen zu reduzieren und gleichzeitig das Erscheinungsbild eines mit Nähten versehenen Dekorbezugs beizubehalten.

Die Anwendung des Verfahrens gemäß dieser Druckschrift hat jedoch zur Folge, dass die dekorative Haut im Bereich der Falte durch die Eigensteifigkeit des Dekormaterials einen rückseitig vorstehenden Bereich aufweist. Dieser Bereich muss in einem Folgeschritt entfernt, oder aber die benachbarten Bauteilschichten müssen derart gestaltet sein, dass der rückseitig herausstehende Bereich der Falte von diesen Schichten ausgenommen werden kann, beispielsweise indem er umschäumt wird oder aber in einer Ausnehmung angeordnet wird.

Die Anwendung von Papier als Dekormaterial bei der Herstellung von Fahrzeuginnenausstattungsteilen ist beispielsweise aus der deutschen Offenlegungsschrift DE 102 44 709 A1 prinzipiell bekannt. Dabei wird in dieser Schrift vorgeschlagen, die Papierschicht netzartig mit Einschnitten zu versehen, so dass diese nach Art eines Streckmetall verformbar ist. Um die Sichtbarkeit des Trägers im Bereich der dadurch entstehenden Öffnungen in der Dekorschicht zu vermeiden, wird vorgeschlagen mehrere Dekorschichten versetzt zueinander anzuordnen. Nachteilig an dieser Lösung ist, dass zur Erzielung einer geschlossenen Dekoroberfläche mehrere Dekorschichten in aufeinanderfolgenden Arbeitsschritten auf den Träger aufgebracht werden müssen, wobei zusätzlich die Positionierung der einzelnen Schichten relativ zueinander passgenau gestaltet werden muss.

### DARSTELLUNG DER EFINDUNG

Die Aufgabe der Erfindung liegt darin, ein Verfahren zum Herstellen eines Innenausstattungsteils bereitzustellen, nach dem auch ein Innenausstattungsteil eines Fahrzeugs erzeugt werden kann, das mit einer Dekorschicht aus Papier versehen ist.

Die Lösung der Aufgabe wird durch das Verfahren nach Anspruch 1 gegeben. Weitere bevorzugte Ausführungsformen der Erfindung ergeben sich aus den Unteransprüchen.

Erfindungsgemäß umfasst ein Verfahren zum Herstellen eines Innenausstattungsteils eines Fahrzeugs einen Schritt des Ausbildens eines zumindest bereichsweise mit einer unebenen Fläche versehenen Trägers und einen Schritt des Aufbringens einer Dekorschicht aus Papier auf die unebene Fläche des Trägers, wobei die Dekorschicht zur gezielten Faltenbildung während oder vor dem Aufbringen auf die unebene Fläche des Trägers vorgesehen ist. Mit anderen Worten wird erfindungsgemäß eine auf die unebene Fläche aufzubringende Dekorschicht ausgeformt und hinsichtlich einer mit dem Ausformen verbundenen Faltenbildung behandelt, um gezielt Falten in die Dekorschicht einzubringen.

Dadurch, dass die Dekorschicht zur gezielten Faltenbildung während oder vor dem Aufbringen auf die unebene Fläche des Trägers vorgesehen ist, ist ein hoher Grad an Reproduzierbarkeit von Innenausstattungsteilen für Fahrzeuge mit Dekorschichten aus Papier möglich. Da Papier nur in sehr geringem Maße dehnbar ist, ist es bei bestimmten Formgebungen eines Trägers eines Innenausstattungsteils unvermeidlich, dass das Papier Falten wirft. Nur solche Oberflächen eines Trägers, die sich verzerrungsfrei auf eine zweidimensionale Ebene abbilden lassen, können von einer Dekorschicht aus Papier faltenfrei bedeckt werden, die auf einem Papierbogen in Form einer zweidimensionalen Ebene basiert. Um die heutzutage üblichen Formen von Innenausstattungsteilen, deren Oberfläche zumeist nicht verzerrungsfrei in eine zweidimensionale Ebene abgebildet werden können, auch der Dekorierung mit Papierschichten zugänglich zu machen, wird erfindungsgemäß der Ansatz verfolgt, die Dekorschicht aus Papier so vorzusehen bzw. zu behandeln, dass die Faltenbildung auf der Dekorschicht aus Papier an vordefinierten Stellen und auf definierte Weise gesteuert wird.

Darunter, dass die Dekorschicht zur gezielten Faltenbildung vorgesehen ist oder hinsichtlich einer Faltenbildung behandelt wird, sind verschiedene Bearbeitungsmethoden der Dekorschicht aus Papier zu verstehen. Diese können sowohl vor dem Aufbringen der Dekorschicht auf die unebene Fläche des Trägers als auch währenddessen durchgeführt werden.

Bei dem Träger kann es sich beispielsweise um einen (natur-, glas- oder kohle-) faserverstärkten Kunststoff- oder aber einen Naturfaserträger aus faserartigen Materialien wie Flachs, Sisal, Hanf, Kenaf, Jute oder ähnlichem Material mit einer duroplastischen oder thermoplastischen Matrix handeln. Bevorzugt handelt es sich um einen Träger, der Fasern aus aufbereiteten Zellulosefasern umfasst.

Auf dem Träger kann eine Haptikschicht aus einem Material zur Ausbildung einer Haptik, beispielsweise einem Schaum, einem Textil, einem Gewirke, einem Vlies oder einem anderweitig geeigneten Material angeordnet werden. Dabei ist es Aufgabe dieser Schicht eine für den Fahrzeuginsassen fühlbare Weichheit des Bauteils bereitzustellen. Wenn in der Folge von einem Träger gesprochen wird, soll sowohl ein Träger allein, als auch ein Träger mit zumindest bereichsweise darauf aufgebrachter Haptikschicht umfasst sein.
In einer bevorzugten Ausführungsvariante umfasst das Material der Haptikschicht Zellulosefasern.

Unter dem Ausdruck Papier ist jeder zellulosehaltige Dekorstoff zu verstehen, der wie Papier die Eigenschaft hat, im Wesentlichen nicht dehnbar zu sein.

Eine bevorzugte Ausführungsform sieht vor, dass der Träger und der Dekorstoff aus der gleichen Zellulose, das heißt mit Zellulose aus der gleichen Rohstoffquelle, aufgebaut sind.

Durch die gezielte Faltenbildung gemäß der Erfindung ist es möglich, unvermeidliche Falten entweder in Geometrien verschwinden zu lassen oder durch die Prozessführung zu minimieren oder die Falten selbst als Dekorelemente zu nutzen. Gleichzeitig kann durch die gezielte Faltenbildung eine geschlossene, der Kontur des Trägers angepasste Dekorschicht ausgebildet werden.

Die Art des Vorsehens der Dekorschicht zur gezielten Faltenbildung bzw. der Behandlung der Dekorschicht zur Faltenbildung hängt unter anderem davon ab, welche Form die unebene Fläche des Trägers hat, auf die die Dekorschicht aufgebracht werden soll. Dabei ist auch zu berücksichtigen, welche Form das dabei entstehende Faltenbild haben soll.

Bevorzugt wird die Dekorschicht aus Papier aus einem Faserbrei hergestellt und währenddessen, d.h. bereits während der Herstellung aus dem Faserbrei, in eine bestimmte Kontur gebracht, so dass die mit dem Aufbringen der Dekorschicht verbundene gezielte Faltenbildung beeinflusst wird. Insbesondere kann diese Kontur darin bestehen, dass sich die Materialdicke und/oder Faltstellen über die Dekorschicht unterscheiden und sich auf die Faltenbildung der Dekorschicht beim Aufbringen auf den Träger bemerkbar machen. Auf diese Weise kann die Faltenbildung beim Aufbringen der Dekorschicht, beispielsweise beim Kaschieren auf einen Träger, welches Verfahren eine Möglichkeit des Aufbringens einer Dekorschicht auf die unebene Fläche des Trägers ist, bestimmt werden.

In einem weiteren bevorzugten Verfahren wird das Papier vorgeprägt oder vorgefaltet, so dass die Faltenbildung der Dekorschicht beim Aufbringen der Dekorschicht beeinflusst wird. Dieses auch als Preforming bezeichnete Verfahren kann also insbesondere die Abschnitte für die Faltenbildung festlegen, indem die beim Aufbringen der Dekorschicht auf den Träger zu erwartenden Falten bereits im Vorfeld eingebracht werden. Somit ist es möglich, ungewollte Variationen beim Faltenbild weitgehend auszuschließen.

Ferner wird bevorzugt, dass in die Dekorschicht aus Papier vor dem Aufbringen zumindest ein Schnitt eingebracht wird, so dass zumindest eine Überlappung beim Aufbringen der Dekorschicht gezielt erzeugt und die Faltenbildung der Dekorschicht dadurch beeinflusst wird. Auf diese Weise ist es möglich, Falten an bestimmten Stellen zu vermeiden, indem beispielsweise Überlappungen erzeugt werden. Es ist auch möglich, dass Überlappungen grundsätzlich gewünscht sind. Diese können durch das Einbringen eines Schnitts bereits vor dem Aufbringen der Dekorschicht auf den Träger definiert werden.

Mit Vorteil wird die Dekorschicht aus Papier vor dem Aufbringen zumindest bereichsweise mit einem zusätzlichen Material versehen, so dass die Faltenbildung der Dekorschicht beeinflusst wird. Das zusätzliche Material kann beispielsweise in das Papier eingebracht und das Papier dadurch gestärkt oder auch geschwächt werden, wodurch die Faltenbildung beeinflusst wird. Auf diese Weise ist es möglich, selektiv verstärkte und abgeschwächte Bereiche des Papiermaterials zu erzeugen, die das Faltenbild beim Aufbringen der Dekorschicht auf den Träger wesentlich beeinflussen.

Bevorzugt wird auch, dass die Dekorschicht aus Papier vor dem Aufbringen mit einer Flüssigkeit, insbesondere Wasser oder einer Seifenlauge, befeuchtet wird, so dass die Faltenbildung der Dekorschicht beeinflusst wird. Ein Befeuchten oder Aufbringen von Seifenlauge kann die Eigenschaften des Papiers verändern, beispielsweise die Dehnbarkeit und Festigkeit, und eignet sich somit auch dazu, das gewünschte Faltenbild beim Aufbringen der Dekorschicht auf die unebene Fläche des Trägers bereits im Rahmen einer Vorbehandlung der Dekorschicht aus Papier zu beeinflussen oder sogar zu definieren.

Mit Vorteil umfasst das Aufbringen der Dekorschicht aus Papier ein Kaschierverfahren, bei dem die Dekorschicht derart auf die unebene Fläche kaschiert wird, dass die Faltenbildung der Dekorschicht in einem Randbereich der unebenen Fläche erzeugt wird. Hierzu kann beispielsweise ein angepasster Stempel verwendet werden, der die Falten nach außen drängt und einen zentralen Bereich der unebenen Fläche des Trägers im Wesentlichen faltenfrei belässt. Dies kann auch beispielsweise durch sogenanntes Vorblasen des Papiers unterstützt werden, bei dem die Oberfläche des Papiers beeinflusst werden kann. Durch das Vorblasen können umfangreiche faltenfreie Bereiche erzeugt werden, indem das Papier in diesen Bereichen gestreckt und geglättet wird und sich so während des Kaschierverfahrens faltenfrei an den Träger schmiegt. Auch ist es möglich, dass durch das vorblasen Materialüberschüsse generiert werden, was zur gezielten Faltenbildung der Dekorschicht in den Bereichen mit den Materialüberschüssen führt.

Zusätzlich kann während eines Kaschierprozesses eine Prägung der Dekorschicht aus Papier durchgeführt werden, die die Faltenbildung dekorativ unterstützt.

Weiter bevorzugt überlappt das Papier der Dekorschicht an Schnitten und/oder Knicken, so dass die Faltenbildung der Dekorschicht beeinflusst wird, wenn die Dekorschicht in einem Kaschierverfahren auf den Träger aufgebracht wird. Dieses bevorzugte Merkmal des Verfahrens lässt sich besonders bevorzugt damit kombinieren, dass im Rahmen einer Vorbehandlung Schnitte oder Knicke in das Papier eingebracht werden, die das Überlappen steuern können.

Ein bevorzugtes Charakteristikum der in der Dekorschicht entstehenden Falten ist daher, dass die Dekorschicht im Bereich der Falten nach dem Aufbringen auf die Trägerschicht mehrlagig vorliegt. Wobei die Dekorschicht dabei im Fall einer Überlappung zumindest zweilagig vorliegt, abhängig von der gewählten Art der Faltung aber auch drei- oder vierlagig oder aber mit einer noch größeren Zahl von Lagen.

Ein weiteres bevorzugtes Charakteristikum der in der Dekorschicht entstehenden Falten ist es, dass die einzelnen Lagen der Dekorschicht im Bereich der Faltung unmittelbar benachbart zueinander liegen, bevorzugt unter Bildung einer Kontaktfläche aneinander liegen, besonders bevorzugt miteinander verbunden aneinander liegen.

Weiter bevorzugt wird das Papier der Dekorschicht während des Kaschierens an zumindest einem Haltepunkt angesaugt oder fixiert, so dass eine sternförmige Faltenbildung der Dekorschicht um den Haltepunkt herum erzeugt wird. Unter einer sternförmige Faltenbildung ist in diesem Zusammenhang jede Art der Faltenbildung zu verstehen, von der erkennbar ist, dass sie konzentrisch oder radial gegenüber dem Haltepunkt ausgerichtet ist oder auf andere erkennbare Weise auf den Haltepunkt zurückgeht.

In einer bevorzugten Ausführungsvariante kann die Dekorschicht zumindest in den Bereichen, in denen diese nach dem Kaschierverfahren mehrlagig vorliegt, vorzugsweise im Bereich der Kontaktflächen, mit einem Haftvermittler, vorzugsweise einem thermisch aktivierbaren Haftvermittler, wie beispielsweise einem Schmelzklebstoff, versehen sein bzw. werden. Dadurch kann beispielsweise ein Abstehen der Dekorschicht im Bereich der Falten nach dem Kaschierverfahren vermieden werden und die Faltenbildung der Dekorschicht kann derart fixiert werden.

In einer alternativen Ausführungsvariante ist vorgesehen, die Dekorschicht im Bereich der Kontaktflächen mit einer Naht zu versehen, um die mehreren Lagen der Dekorschicht im Bereich der Falten und/oder Überlappungen zu verbinden. Gleichzeitig bieten derartige Nähte eine weitere Gestaltungsmöglichkeit, um beispielsweise die Wertanmutung der Dekoroberfläche zu steigern.

In einer weiterhin vorteilhaften Weiterbildung der Erfindung werden Bereiche der Dekorschicht, in denen eine Faltenbildung stattgefunden hat, nach dem Kaschierverfahren in ihrer Materialdicke reduziert, um Materialüberschüsse an den Falten und den Überlappungen zu entfernen und in Folge dessen eine weitgehend einheitliche Materialstärke der Dekorschicht zu realisieren. Der Materialabtrag kann dabei beispielsweise durch einen Schäl-, Schleif-, Polier- oder Fräsprozess erfolgen. Auch andere geeignete Abtragsverfahren sind denkbar. In einer bevorzugten Ausführungsvariante wird die Dekorschicht vor oder während des Materialabtrags befeuchtet. Insbesondere wenn das verwendete Papier einen sehr homogenen Aufbau aufweist, kann die spätere Sichtbarkeit der Falten durch einen derartigen Bearbeitungsschritt vermieden werden.
Alternativ kann der Materialabtrag aber auch genutzt werden, um im Bereich der Falten ein zusätzliches Dekor zu realisieren, beispielsweise indem andersfarbige Bereiche der Dekorschicht durch das Abtragsverfahren freigelegt werden.

Mit Vorteil wird nach dem Aufbringen der Dekorschicht aus Papier eine Overlayfolie und/oder eine Lackschicht auf die Dekorschicht aufgebracht, so dass die Faltenbildung der Dekorschicht zusätzlich fixiert wird. Auf diese Weise können beispielsweise die Kratzfestigkeit oder die Schmutz-unempfindlichkeit der Dekorschicht aus Papier erhöht und/oder weitere dekorative Effekte erzielt werden.

Die Overlayfolie und/oder die Lackschicht können in einem Folgeschritt mit einer Prägung, beispielsweise einer nachgeahmten natürlichen Narbung oder einem kreierten Muster, versehen werden. Hierdurch kann beispielsweise eine Lederschicht nachgeahmt werden.

Das Papier der Dekorschicht kann ein oder mehrfarbig gestaltet sein. Dabei ist es bevorzugt, wenn die Farbgebung des Papiers bei dessen Herstellung erfolgt.

In einer besonderen Ausführungsvariante kann die Farbgebung der Dekorschicht derart gestaltet sein, dass sich die Farben der im Wesentlichen als Sichtseite von der im Wesentlichen als Rückseite vorgesehenen Seite der Dekorschicht unterscheidet. Durch ein geschickt gewähltes Faltenbild kann eine derartige Dekorschicht verwendet werden, um ein vorteilhaftes Design zu realisieren, bei dem die Farbe der Rückseite im Bereich der Falten zumindest bereichsweise sichtbar wird.

Vor oder nach dem Aufbringen der Dekorschicht kann diese zusätzlich bedruckt werden. Eine Bedruckung kann dabei mit beliebigen aus dem Stand der Technik bekannten Verfahren erfolgen und beispielsweise zur Darstellung von Mustern oder Symboliken erfolgen, beispielsweise um Funktionselemente optisch lokalisieren zu können, die hinter diesen Bereichen angeordnet sind.

Die Dekorschicht kann zumindest in Bereichen mit Perforationen versehen werden, um beispielsweise lichtdurchflutbar oder mit einem Fluid durchströmbar zu sein.

Das Papier der Dekorschicht ist ein zellulosehaltiges Material, dass in gestrichener, lackierter, geprägter und/oder bedruckter Form vorliegen kann und dessen Flächengewicht bevorzugt zwischen 20 g/m² und 600 g/m² liegt. Das Papier kann auch ganz oder teilweise aus Recyclaten bestehen und auch mit einer Alkalilauge versetzt sein, um die Reibung gegenüber dem verarbeitenden Werkzeug zu reduzieren.

Neben Zellulosefasern kann das Material der Dekorschicht zusätzlich eine Beimischung von transparenten Glas- und/oder Kunststofffasern aufweisen. Ein derartiges Material ist lichtdurchflutbar, beispielsweise durch eine hinter der Dekorschicht angeordnete Lichtquelle.

Dabei kann bei lichtdurchflutbaren Materialien die Faltenbildung ebenfalls genutzt werden, um optische Effekte hervorzurufen, da der Transparenzgrad im Bereich der Überlappungen und Falten sich von den umgebenden Bereichen unterscheidet. Hierdurch können Muster erzeugt werden, die erst bei einer Hinterleuchtung der Dekorschicht sichtbar werden.

Sofern der Träger mit einer duroplastischen Matrix versehen ist, kann der Träger ohne zusätzliche Klebestoffe ausgehärtet und mit der Dekorschicht in einem Werkzeug bei Temperaturen von zwischen 100°C und 250°C, bevorzugt von zwischen 180°C und 220°C verbunden werden. Bei einer thermoplastischen Matrix wird der Träger bevorzugt in einer Kontaktheizpresse vorgeheizt und komprimiert und in einer kalten Presse mit der Dekorschicht zusammengeführt, wobei bevorzugt ein Kleber zum Verbinden von Dekor und Träger eingesetzt wird.

In einer alternativen Ausführungsvariante kann die Dekorschicht bereits während der Herstellung mit einem aktivierbaren Klebstoff, beispielsweise einem Schmelzklebstoff, versehen sein, der zur späteren Verbindung der Dekorschicht mit der Trägerschicht und/oder einer Overlayfolie oder aber auch zur Verbindung der einzelnen Lagen der Dekorschicht im Bereich der Falten genutzt werden kann. Der Klebstoff kann dabei ein- oder beidseitig an der Dekorschicht vorgesehen sein oder aber gleichmäßig verteilt, bei der Herstellung der Dekorschicht in diese eingearbeitet, vorliegen.

Durch das vorstehend geschilderte Verfahren ist es möglich, Innenausstattungsteile für Fahrzeuge herzustellen, die sich durch eine ausgezeichnete Optik gegenüber dem Stand der Technik auszeichnen. Eine gezielte Faltenführung bei dem neuen Dekorschichtwerkstoff Papier ermöglicht es, ohne Zugeständnisse beim optischen Erscheinungsbild des Innenausstattungsteils neue Materialien zu verwenden und das Innenausstattungsteil leichter auszuführen. Darüber hinaus zeichnet sich das Verfahren dadurch aus, dass es möglich ist, besonders effizient, das heißt mit geringen Fertigungskosten und auf der Grundlage eines niedrigen Rohstoffpreises, Innenausstattungsteile herzustellen, die sich zudem zu einem großen Teil stofflich wiederverwerten lassen.

Als Beispiele für erfindungsgemäße Innenausstattungsteile können Verkleidungsteile im Fahrzeuginnenraum wie etwa ein Dachhimmel, eine Türverkleidung, eine Instrumententafel, eine Mittelkonsole, eine Hutablage und dergleichen aufgezählt werden.

### KURZE FIGURENBESCHREIBUNG

- Fig. 1A-1C: zeigen schematische Schnittansichten einer Dekorschicht mit einer Faltenbildung.
- Fig. 2A-2C: zeigen schematische Ansichten einer Dekorschicht mit einem Einschnitt.
- Fig. 3A-3C: zeigen schematische Ansichten einer Dekorschicht mit einem Einschnitt und einem vorgeformten Bereich für eine Faltenbildung.

### WEGE ZUR AUSFÜHRUNG DER ERFINDUNG

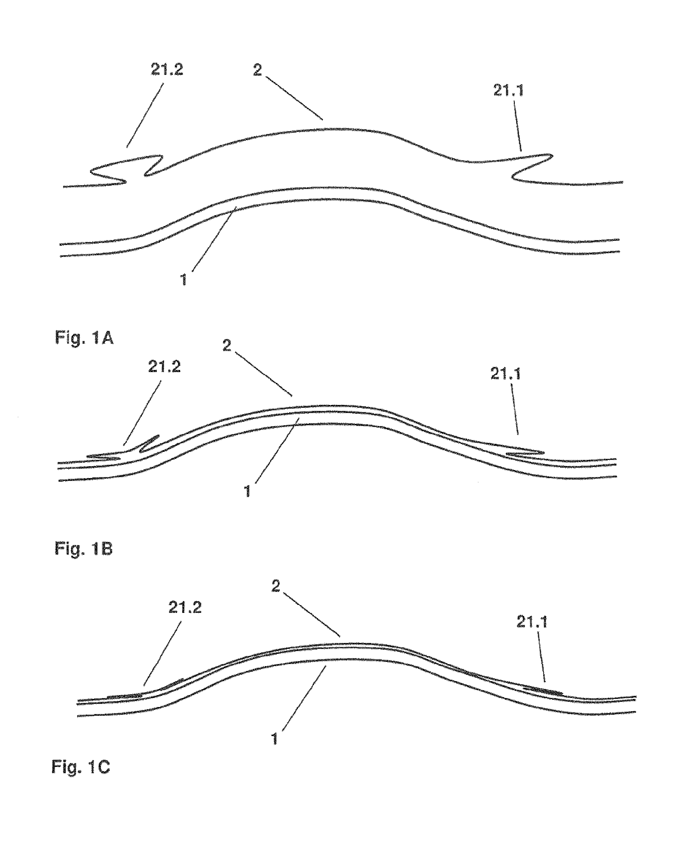

Fig. 1A-1C zeigen in einer schematischen Schnittansicht eine Dekorschicht 2 mit verschiedenartig vorgeformten Bereichen zur Faltenbildung 21.1, 21.2 zu verschiedenen Zeitpunkten der Aufbringung auf den Träger 1.

Dabei zeigt Figur 1A in einer Schnittansicht die noch mit Abstand zum bereits ausgebildeten Träger 1 angeordnete Dekorschicht 2, in der jedoch bereits zwei Falten, die im Querschnitt einen oder mehrere Wechselwinkel bilden, nämlich eine sogenannte Z-Falte 21.1 und eine Doppel-Z-Falte 21.2, vorgefaltet wurden. Vorteilhafterweise beginnen die Falten 21.1, 21.2 randseitig und verlaufen, angepasst an die Geometrie des Trägers 1 in vorbestimmten Winkeln in das innere der Dekorschicht 2 hinein. Dabei können die im Querschnitt sichtbaren Wechselwinkel bzw. Z-Falten bei ihrem Verlauf vom Rand der Dekorschicht 2 in das Innere der Dekorschicht 2 abnehmende Schenkellängen aufweisen und derart ein Auslaufen der Falte bewirken. Alternativ kann im Innern der Dekorschicht ein Einschnitt vorgesehen sein der ein Verpressen der Falte ermöglicht, ohne dass eine ungewünschte Materialanhäufung entsteht. Dabei verlaufen die Falt- bzw. Knicklinien entlang der Scheitelpunkte der Z-Falten 21.1, 21.2. Fig. 1B zeigt einen ersten späteren Zeitpunkt der Aufbringung der Dekorschicht 2 auf den Träger 1. Dabei hat eine lockere Verpressung der Dekorschicht 2 stattgefunden und definierte Faltlinien haben sich ausgebildet. Fig. 1C zeigt einen weiteren späteren Zeitpunkt der Aufbringung der Dekorschicht 2 auf den Träger 1, bei dem eine Aktivierung des in der Dekorschicht enthaltenen Schmelzklebstoffes eine Verbindung des Trägers 1 mit der Dekorschicht 2 und der im Bereich der Falten 21.1 und 21.2 mehrlagig vorliegenden Dekorschicht 2 mit sich selbst bewirkt hat.

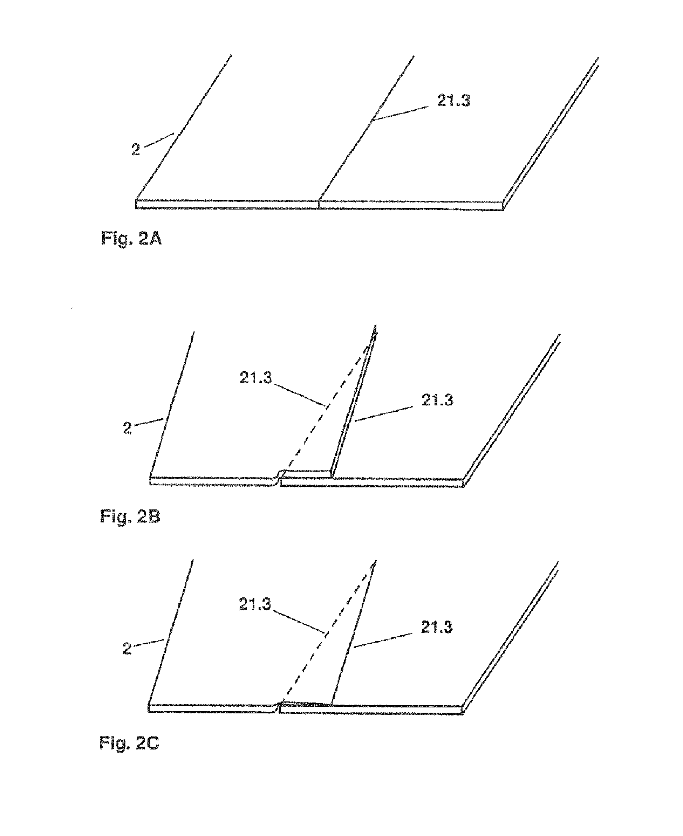

Fig. 2A-2C zeigen in einer schematischen Ansicht eine Dekorschicht 2 mit einem Einschnitt mit Schnittkanten 21.3 zur Herstellung eines definierten Überlappungsbereichs zwischen den Schnittkanten des Einschnitts 21.3 bei der Aufbringung der Dekorschicht 2 auf den Träger (nicht dargestellt).

Dabei zeigt Fig. 2A eine ebene Dekorschicht 2, die mit einem randseitigen Einschnitt 21.3 versehen wird, wobei zwei Schnittkanten ausgebildet werden. Fig. 2B zeigt einen Folgeschritt bei dem die Dekorschicht 2 im von den Schnittkanten des Einschnittes 21.3 gebildeten Bereich überlappend angeordnet wird, wobei die Dekorschicht eine unebene, dem Träger angepasste Kontur (nicht dargestellt) ausbildet. Zusätzlich werden die sich überlappenden Bereiche der Dekorschicht, beispielsweise über einen Haftvermittler, miteinander verbunden. Fig. 2C zeigt einen weiteren Folgeschritt bei dem im Bereich der Überlappung die obere Lage der Dekorschicht 2 durch einen Materialabtrag ausgedünnt wird, so dass sich die Schichtdicke der Dekorschicht 2 im Bereich der Überlappung nur noch geringfügig von den umgebenden Bereichen unterscheidet.

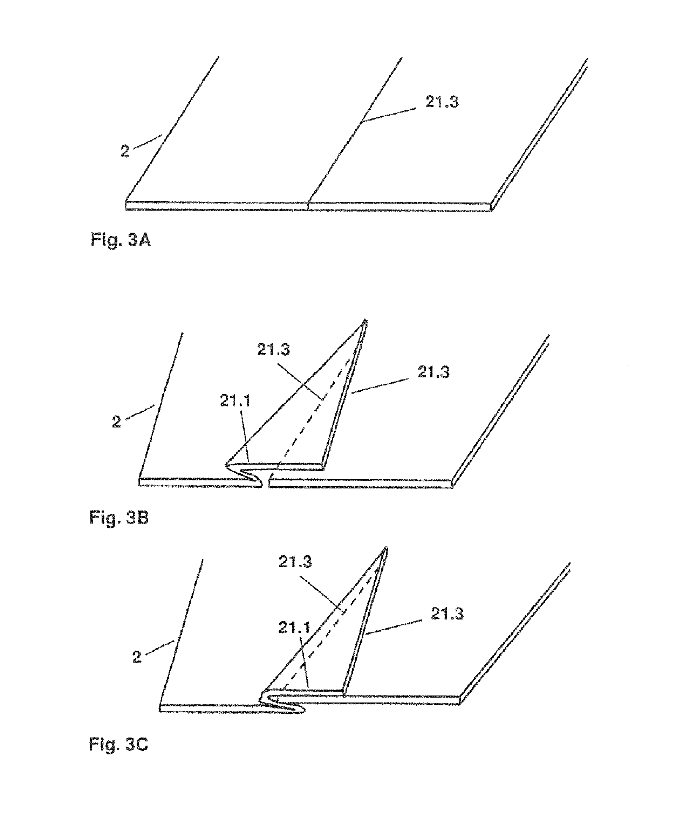

Die Fig. 3A-3C zeigen ebenfalls in einer schematischen Ansicht eine Dekorschicht 2 mit einem Einschnitt mit Schnittkanten 21.3 und einem vorgeformten Bereich zur Faltenbildung 21.1 zur Aufnahme einer Schnittkante des Einschnitts 21.3 der Dekorschicht bei der Aufbringung der Dekorschicht 2 auf den Träger (nicht dargestellt).
Dabei zeigt Fig. 3A entsprechend Fig. 2A eine Dekorschicht 2, die mit einem randseitigen Einschnitt 21.3 versehen wird. Fig. 3B zeigt in einem Folgeschritt die Dekorschicht 2, wobei eine der Schnittkanten des Einschnitts 21.3 zu einer Z-Falte 21.1 vorgeformt wird, wobei die Schenkellängen der Z-Falte 21.1 derart gestaltet sind, dass diese in Richtung vom Rand der Dekorschicht 2 in deren Inneres abnehmen. Zwei Schenkel der Z-Falte 21.1 sind zur Aufnahme der gegenüberliegenden Schnittkante des Einschnittes 21.3 ausgebildet, wobei durch die Anordnung der Schnittkante innerhalb der Schenkel der Z-Falte 21.1 die ursprünglich ebene Kontur der Dekorschicht 2 in eine unebene Kontur, angepasst an die Kontur des Trägers (nicht dargestellt), geändert wird. Durch die Anordnung der Schnittkante innerhalb der Schenkel besteht gleichzeitig die Möglichkeit einen gewissen Toleranzausgleich zu bewirken, indem die Schnittkante mehr oder weniger tief in die Schenkel eingeschoben wird. Fig. 3C zeigt einen späteren Folgeschritt bei dem die sich überlagernden Bereiche der Dekorschicht 2 miteinander verbunden sind.

## Patentansprüche

1. Verfahren zum Herstellen eines Innenausstattungsteils eines Fahrzeugs, umfassend die folgenden Schritte:
Ausbilden eines zumindest bereichsweise mit einer unebenen Fläche versehenen Trägers (1) und
Aufbringen einer Dekorschicht (2) aus Papier auf die unebene Fläche des Trägers (1),
wobei die Dekorschicht (2) zur gezielten Faltenbildung während oder vor dem Aufbringen auf die unebene Fläche des Trägers (1) vorgesehen ist.

2. Verfahren nach Anspruch 1, wobei
die Dekorschicht (2) aus Papier aus einem Faserbrei hergestellt wird und
währenddessen in eine bestimmte Kontur, insbesondere in eine Kontur mit über die Dekorschicht (2) unterschiedlichen Materialdicken und/oder mit Faltstellen, gebracht wird,
so dass die mit dem Aufbringen der Dekorschicht (2) verbundene gezielte Faltenbildung beeinflusst wird.

3. Verfahren nach einem der vorhergehenden Ansprüche, wobei die Dekorschicht (2) aus Papier vor dem Aufbringen vorgeprägt oder vorgefaltet wird,
so dass die Faltenbildung der Dekorschicht (2) beeinflusst wird.

4. Verfahren nach einem der vorhergehenden Ansprüche, wobei in die Dekorschicht (2) aus Papier vor dem Aufbringen zumindest ein Schnitteingebracht wird,
so dass zumindest eine Überlappung beim Aufbringen der Dekorschicht (2) gezielt erzeugt und
die Faltenbildung der Dekorschicht (2) dadurch beeinflusst wird.

5. Verfahren nach einem der vorhergehenden Ansprüche, wobei die Dekorschicht (2) aus Papier vor dem Aufbringen zumindest bereichsweise mit einem zusätzlichen Material versehen wird, insbesondere mit einer Flüssigkeit, vorzugsweise Wasser oder einer Seifenlauge,
so dass die Faltenbildung der Dekorschicht (2) beeinflusst wird.

6. Verfahren nach einem der vorhergehenden Ansprüche, wobei das Aufbringen der Dekorschicht (2) aus Papier ein Kaschierverfahren umfasst,
bei dem die Dekorschicht (2) derart auf die unebene Fläche kaschiert wird, dass die Faltenbildung der Dekorschicht (2) in einem Randbereich der unebenen Fläche erzeugt wird.

7. Verfahren nach einem der vorhergehenden Ansprüche, wobei das Aufbringen der Dekorschicht (2) aus Papier ein Kaschierverfahren umfasst,
bei dem das Papier der Dekorschicht (2) an Schnitten und/oder Knicken überlappt,
so dass die Faltenbildung der Dekorschicht (2) beeinflusst wird.

8. Verfahren nach einem der vorhergehenden Ansprüche, wobei das Aufbringen der Dekorschicht (2) aus Papier ein Kaschierverfahren umfasst,
bei dem das Papier der Dekorschicht (2) in den Bereichen, in denen eine Faltenbildung stattgefunden hat, durch einen Materialabtrag in seiner Materialdicke reduziert wird.

9. Verfahren nach einem der vorhergehenden Ansprüche, wobei nach dem Aufbringen der Dekorschicht (2) aus Papier eine Overlayfolie und/oder eine Lackschicht auf die Dekorschicht (2) aufgebracht wird,
so dass die Faltenbildung der Dekorschicht (2) fixiert wird.

## Claims

1. Method for producing an interior trim part of a vehicle, comprising the following steps:
forming a substrate (1) provided with an uneven surface, at least in some areas,
applying a decorative layer (2) made of paper to the uneven surface of the substrate (1),
wherein the decorative layer (2) is provided for deliberate fold formation during or before the application to the uneven surface of the substrate (1).

2. Method according to Claim 1, wherein
the decorative layer (2) made of paper is produced from a fibrous pulp and
during the same, is brought to a certain contour, in particular a contour with different material thicknesses over the decorative layer (2) and/or with folds,
so that the deliberate fold formation connected with the application of the decorative layer (2) is influenced.

3. Method according to one of the preceding claims, wherein the decorative layer (2) made of paper is pre-embossed or pre-folded before the application,
so that the fold formation of the decorative layer (2) is influenced.

4. Method according to one of the preceding claims, wherein at least one cut is introduced into the decorative layer (2) made of paper before the application,
so that at least one overlap is deliberately produced during the application of the decorative layer (2), and
the fold formation of the decorative layer (2) is influenced as a result.

5. Method according to one of the preceding claims, wherein, before the application, the decorative layer (2) made of paper is provided with an additional material, at least in some areas, in particular with a liquid, preferably water or a soap solution,
so that the fold formation of the decorative layer (2) is influenced.

6. Method according to one of the preceding claims, wherein the application of the decorative layer (2) made of paper comprises a laminating method,
in which the decorative layer (2) is laminated onto the uneven surface in such a way that the fold formation of the decorative layer (2) is produced in an edge region of the uneven surface.

7. Method according to one of the preceding claims, wherein the application of the decorative layer (2) made of paper comprises a laminating method,
in which the paper of the decorative layer (2) overlaps at cuts and/or bends,
so that the fold formation of the decorative layer (2) is influenced.

8. Method according to one of the preceding claims, wherein the application of the decorative layer (2) made of paper comprises a laminating method,
in which the material thickness of the paper of the decorative layer (2) is reduced by material removal in the areas in which a fold formation has taken place.

9. Method according to one of the preceding claims, wherein, following the application of the decorative layer (2) made of paper, an overlay film and/or a varnish layer is applied to the decorative layer (2),
so that the fold formation of the decorative layer (2) is fixed.

## Revendications

1. Procédé de fabrication d'une partie d'équipement intérieur d'un véhicule, comprenant les étapes suivantes:
formation d'un support (1) doté au moins localement d'une surface non plane, et
application d'une couche décorative (2) en papier sur la surface non plane du support (1),
dans lequel la couche décorative (2) est prévue pour la formation ciblée de plis pendant ou avant l'application sur la surface non plane du support (1).

2. Procédé selon la revendication 1, dans lequel
on fabrique la couche décorative (2) en papier à partir d'une pâte de fibres et
pendant ce temps on l'amène à un contour déterminé, en particulier à un contour présentant des épaisseurs de matière différentes et/ou des zones de pliage sur la couche décorative (2)
de telle manière que la formation ciblée de plis accompagnant l'application de la couche décorative (2) soit influencée.

3. Procédé selon l'une quelconque des revendications précédentes, dans lequel la couche décorative (2) en papier est prégaufrée ou prépliée avant l'application,
de telle manière que la formation de plis de la couche décorative (2) soit influencée.

4. Procédé selon l'une quelconque des revendications précédentes, dans lequel on pratique au moins une entaille dans la couche décorative (2) en papier avant l'application,
de telle manière qu'au moins un recouvrement ciblé soit produit lors de l'application de la couche décorative (2) et
que la formation de plis de la couche décorative (2) soit de ce fait influencée.

5. Procédé selon l'une quelconque des revendications précédentes, dans lequel la couche décorative (2) en papier est dotée avant l'application, au moins localement, d'une matière additionnelle, en particulier d'un liquide, de préférence d'eau ou d'une lessive de savon,
de telle manière que la formation de plis de la couche décorative (2) soit influencée.

6. Procédé selon l'une quelconque des revendications précédentes, dans lequel l'application de la couche décorative (2) en papier comprend une opération de doublure,
dans laquelle la couche décorative (2) est collée sur la surface non plane, de telle manière que la formation de plis de la couche décorative (2) soit produite dans une région de bord de la surface non plane.

7. Procédé selon l'une quelconque des revendications précédentes, dans lequel l'application de la couche décorative (2) en papier comprend une opération de doublure,
dans laquelle le papier de la couche décorative (2) se chevauche à des entailles et/ou des plis,
de telle manière que la formation de plis de la couche décorative (2) soit influencée.

8. Procédé selon l'une quelconque des revendications précédentes, dans lequel l'application de la couche décorative (2) en papier comprend une opération de doublure,
dans laquelle le papier de la couche décorative (2) a une épaisseur de matière réduite par un enlèvement de matière, dans les régions dans lesquelles une formation de plis s'est produite.

9. Procédé selon l'une quelconque des revendications précédentes, dans lequel, après l'application de la couche décorative (2) en papier, on applique une feuille d'overlay et/ou une couche de laque sur la couche décorative (2),
de telle manière que la formation de plis de la couche décorative (2) soit fixée.
